# EUROPÄISCHE PATENTANMELDUNG

(11) **EP 0 855 241 A1**
(43) Veröffentlichungstag der Anmeldung: **29.07.1998**
(21) Anmeldenummer: 97810858.7
(22) Anmeldetag: 11.11.1997
(51) Int. Cl.: B23K 33/00, E04D 13/08

(54) **Verfahren zum Herstellen einer wasserdichten Verbindung zwischen zwei Blechteilen**

(30) Priorität: 27.01.1997 CH 165/97
(71) Anmelder: Strub, Manfred, 3250 Lyss (CH)
(72) Erfinder: Strub, Manfred, 3250 Lyss (CH)
(74) Vertreter: Roshardt, Werner Alfred, Dipl.-Phys.

(57) **Zusammenfassung**

Bei einem Verfahren zum Verbinden von zwei Blechteilen, insbesondere zur Herstellung von Blechrohren, werden zuerst an den zu verbindenden Rändern der Blechteile (3.1, 3.2) abgekantete Bereiche (4.1, ..., 4.4) ausgebildet. Dann werden die Blechteile (3.1, 3.2) so aneinander gelegt, dass die abgekanteten Bereiche (4.1, ..., 4.4) Wange an Wange liegen. Zum Verbinden der Teile (3.1, 3.2) wird eine an sich bekannte WIG-Schweissung verwendet, wobei die abgekanteten Bereiche (4.1, ..., 4.4) mehr oder weniger vollständig abgebrannt werden. Auf diese Art entsteht eine wasserdichte schnurartige Schweissnaht mit hoher Reissfestigkeit.

## Beschreibung

### Technisches Gebiet

Die Erfindung betrifft ein Verfahren zum Herstellen einer wasserdichten Verbindung zwischen zwei Blechteilen unter Einsatz einer Schweissung. Ferner bezieht sich die Erfindung auf eine Anwendung dieses Verfahrens und ein nach diesem Verfahren hergestelltes Blechrohr.

### Stand der Technik

Blechrohre (wie sie z. B. als Abflussrohre für Dachrinnen verwendet werden) werden aus Blechstücken durch Falzen entlang einer Naht hergestellt. Rohrbogen bestehen konventionellerweise aus zwei Hälften, die durch eine Falznaht verbunden sind. In neuerer Zeit werden auch Schweissnähte angebracht.

Die bekannten Verfahren zur Herstellung von Blechrohren durch Schweissen sind z. T. sehr teuer oder ästhetisch nicht befriedigend.

### Darstellung der Erfindung

Aufgabe der Erfindung ist es, ein Verfahren zum Verbinden von zwei Blechteilen anzugeben, das sich insbesondere zur Herstellung von Blechrohren eignet. Dabei soll die Verbindung nicht nur wasserdicht sein, sondern auch ästhetisch befriedigen.

Die Lösung der Aufgabe ist durch die Merkmale des Anspruchs 1 definiert. Gemäss der Erfindung werden zuerst an den zu verbindenden Rändern der Blechteile abgekantete Bereiche ausgebildet. Dann werden die Blechteile so aneinander gelegt, dass die abgekanteten Bereiche Wange an Wange in Kontakt sind. Zum Verbinden der Teile wird eine (an sich bekannte) WIG-Schweissung eingesetzt, wobei die abgekanteten Bereiche mehr oder weniger vollständig abgebrannt werden.

Eine WIG-Schweissung (WIG = Wolfram Inertgas; engl. TIG = Tungsten Inert Gas) arbeitet mit einer Wolfram-Elektrode im Inertgas. Schweissgeräte dieser Art sind auf dem Markt erhältlich.

Durch die Abkantung wird es viel einfacher, die Blechteile entlang eines längeren Randes in Kontakt zu bringen und dicht zu verschweissen. Ungenauigkeiten beim Zuschneiden der Blechteile sind weitgehend unkritisch. Die Abkantung selbst ist zudem leicht federnd, so dass auch bei gewissen fertigungsbedingten Toleranzen ein linienförmiger Kontakt entlang der Naht gewährleistet ist. Durch das Abbrennen des abgekanteten Randes wird im übrigen genügend Material verflüssigt, um eine nicht nur dichte, sondern auch mechanisch äusserst belastbare Schweissnaht zu erzeugen. Versuche haben gezeigt, dass die Schweissnaht sogar eine höhere Reissfestigkeit haben kann als das Blech selbst.

Der abgekantete Bereich wird mit Vorteil so schmal wie möglich gemacht. Als sinnvolle obere Grenze kann das 5-fache der Dicke des Bleches betrachtet werden. Die untere Grenze ergibt sich aus der Tatsache, dass es sehr schwierig ist, Abkantungen herzustellen, die schmaler sind als die Dicke des Bleches.

Das verflüssigte Material des abgebrannten Randbereiches sammelt sich an der Schweissnaht und erzeugt eine entsprechende Verdickung. Mit anderen Worten: Die Schweissnaht sieht wie eine Schnur aus. Eine ästhetisch ansprechende Erscheinung der Schweissnaht kann insbesondere dadurch erreicht werden, dass die Unterlage, auf welcher die zu verbindenden Blechteile beim Schweissen aufliegen, eine kleine Rinne aufweist. Dies führt nämlich dazu, dass das flüssige Material sich nicht nur auf einer Seite ansammelt, sondern sich mehr oder weniger symmetrisch verteilen kann. Im Endeffekt entsteht eine schöne, im Querschnitt runde Naht.

Das erfindungsgemässe Verfahren eignet sich vorzüglich zum Herstellen von Blechrohren, und zwar nicht nur von geraden sondern auch von gekrümmten. Besonders interessant ist die Anwendung des Verfahrens zur Herstellung von Rohren aus Kupfer- oder Zinkblech (diese Materialien gelten als anforderungsreich). Problemlos ist die Verwendung von rostfreien Blechen, von Eisenblechen, von Aluminiumblechen etc. Typischerweise werden Blechdicken von einigen 1/10 mm bis 1 oder 2 mm benutzt. Bei einer Blechdicke von z. B. 5/10 mm wird am Rand ein Streifen von ca. 1.5 mm abgekantet.

Im Sinn einer bevorzugten Ausführungsform werden bei der Herstellung eines Rohrbogens die Blechteile so geschnitten, vorgeformt und verschweisst, dass die zwei Schweissnähte entlang der Linie des Wasserlaufes (und nicht an den beiden Seiten) des Rohrbogens verlaufen. Der Rohrbogen wird also im Prinzip aus zwei spiegelsymmetrischen Hälften zusammengesetzt. Eine andere Anordnung der Schweissnähte soll aber in keiner Weise ausgeschlossen sein.

Die Form der Rohrhälften kann durch Tiefziehen erzeugt werden. Selbstverständlich sind aber auch andere Formverfahren möglich.

Ein nach dem erfindungsgemässen Verfahren hergestelltes Rohr erkennt man an der schnurartigen Ausbildung der Schweissnaht. Im Unterschied dazu ist eine durch Stumpfschweissen hergestellte Naht weitgehend flach und frei von Verdickungen (entsprechend ist die Reissfestigkeit geringer). Ebenfalls zu unterscheiden ist die erfindungsgemässe Naht von solchen, bei welchen die verschweissten Bleche einander überlappen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische perspektivische Darstellung eines Rohrbogens;
- Fig. 2a-e: eine schematische Darstellung der einzelnen Schritte des Herstellungsverfahrens;
- Fig. 3a, b: eine schematische Darstellung des Schweissvorgangs.

Grundsätzlich sind in den Figuren gleiche Teile mit gleichen Bezugszeichen versehen.

### Wege zur Ausführung der Erfindung

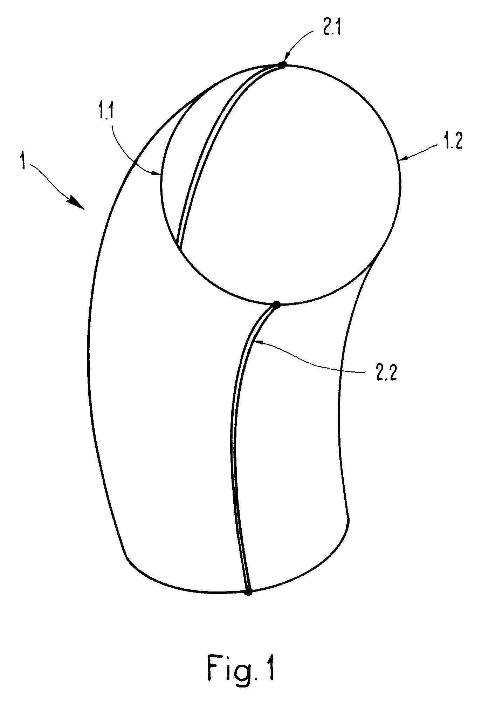

Fig. 1 zeigt beispielhaft einen erfindungsgemässen Rohrbogen 1. Dieser ist aus zwei im wesentlichen spiegelsymmetrischen Teilen 1.1, 1.2 zusammengesetzt. Die verbindenden Schweissnähte 2.1, 2.2 sind - im Sinn einer bevorzugten Ausführungsform - im Wasserlauf des Rohrbogens 1 angebracht (d. h. in der Spiegelsymmetrieebene).

Die Schweissnähte 2.1, 2.2 sind schnurartig ausgebildet. Die Entstehung dieser Nahtform lässt sich am besten anhand des nachfolgend beschriebenen Herstellungsverfahrens erklären.

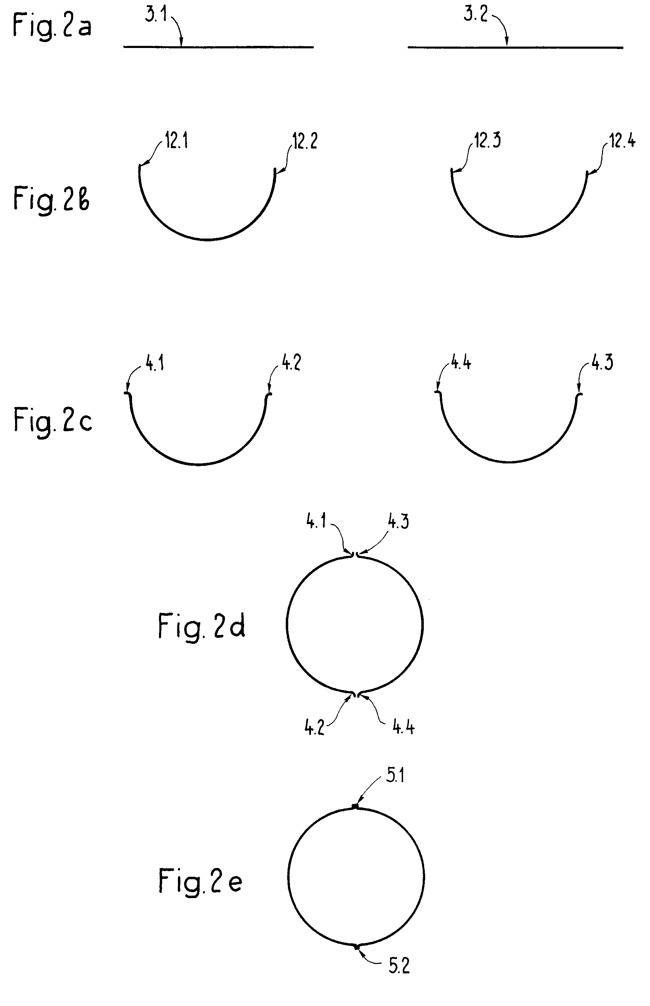

In Fig. 2a sind zwei zugeschnittene Bleche 3.1, 3.2 im Querschnitt dargestellt. Sie werden z. B. durch Tiefziehen in die gewünschte Form gebracht (Fig. 2b). Es liegen nun zwei Halbschalen vor. An den Rändern 12.1, ..., 12.4, an denen die beiden Halbschalen zu verbinden sind, werden Abkantungen 4.1, ..., 4.4 angebracht. D. h. ein schmaler Randstreifen (einer Breite von z. B. 1-2 mm) wird um beispielsweise 90° nach aussen umgebogen (Fig. 2c).

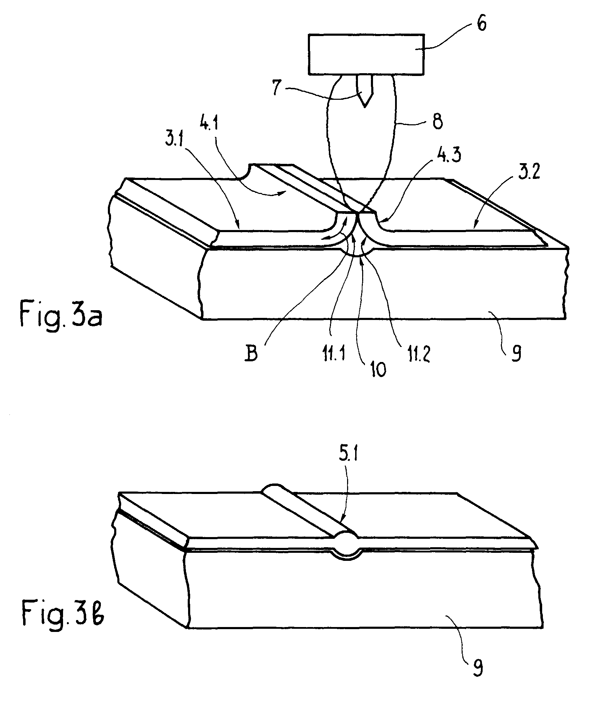

Im nachfolgenden Schritt (Fig. 2d) werden die Halbschalen in bestimmungsgemässer Weise aneinander gelegt. D. h. die Abkantungen 4.1 und 4.2 bzw. 4.3 und 4.4 berühren sich Wange zu Wange (vgl. Fig. 3a: 11.1, 11.2). In dieser Stellung werden sie für die nachfolgende Schweissung mit dem erforderlichen Druck gegeneinander gedrückt.

Schliesslich wird in an sich bekannter Weise eine WIG-Schweissung durchgeführt. Dabei wird der abgekantete Bereich weitgehend abgebrannt. Das geschmolzene Material sammelt sich entlang der Schweissnaht 5.1 bzw. 5.2 und bildet dort eine schnur- oder wurstartige Verdickung.

Fig. 3a, b zeigt schematisch eine vergrösserte Darstellung der Schweissstelle. Wie bereits erwähnt, liegen die Bleche 3.1, 3.2 (welche beispielsweise aus Kupfer sind) in Kontakt zueinander auf einer Unterlage 9. Die bogenförmig nach oben zeigenden Ränder (Abkantungen 4.1, 4.3) berühren sich an den Wangen 11.1, 11.2. Zur Durchführung der WIG-Schweissung werden sie gegeneinander gedrückt. Da die Abkantungen 4.1, 4.2 wie kleine Federn wirken, schmiegen sie sich entlang der ganzen Nahtstelle fest aneinander.

Es leuchtet ein, dass bei einer derartigen Berührung der Bleche 3.1, 3.2 Variationen bzw. Ungenauigkeiten beim Schneiden derselben praktisch keinen Einfluss auf den Randkontakt haben. Es kann also von vornherein ausgeschlossen werden, dass der Kontakt ungenügend ist. (Diesbezüglich besteht ein wesentlicher Vorteil zum bekannten Stumpfschweissen.)

In Fig. 3a ist die Schweissdüse 6 mit der Elektrode 7 angedeutet. Der Lichtbogen 8 brennt die nach oben stehenden Abkantungen 4.1, 4.2 ab, wobei sich genügend flüssiges Metall (z. B. Kupfer) an der Schweissnaht bilden kann, um eine leicht verdickte Verbindung zu bilden. Diese Verdickung ist durchaus erwünscht. Wäre sie nicht da, bzw. würde nicht das entsprechende Materialvolumen zur Verfügung stehen, könnte es passieren, dass die Schweissnaht an kritischen Stellen nicht geschlossen ist, sondern Löcher bzw. Schlitze aufweist.

Fig. 3b zeigt die fertiggestellte Schweissnaht 5.1. Sie ist mehr oder weniger symmetrisch zu der durch die Bleche 3.1, 3.2 definierten Ebene. Dazu trägt insbesondere die rinnenartige Vertiefung 10 bei. Sie lässt es zu, dass das abgebrannte, flüssige Material auch etwas nach unten ausweichen kann und sich nicht einfach auf der oberen Seite aufstaut.

Im Prinzip wird mit einer WIG-Schweissung eine Punkt-zu-Punkt-Verbindung hergestellt. Zum Verbinden der Bleche wird also die Elektrode entlang der Naht bewegt (z. B. mit Hilfe eines Schweissroboters). Die Geschwindigkeit hängt von der eingestellten Stromstärke, der Dicke des Bleches und vom verwendeten Metall ab. Die geeignete Wahl dieser Parameter liegt im Rahmen fachmännischen Handelns.

Auch die Abkantung kann mit an sich bekannten Maschinen hergestellt werden. Im Endeffekt geht es einfach um ein mechanisches Umbiegen des Randes.

Zusammenfassend ist festzustellen, dass das erfindungsgemässe Verfahren die Herstellung von wasserdichten und ästhetisch ansprechenden Schweissnähten erlaubt. Bei der Produktion gibt es keine überdurchschnittlichen Anforderungen an die Präzision der vorbereitenden Schritte (stanzen bzw. schneiden der Blechformen). Trotzdem können hohe Qualität der Nähte und geringer Ausschuss unter einen Hut gebracht werden.

## Patentansprüche

1. Verfahren zum Herstellen einer wasserdichten Verbindung zwischen zwei Blechteilen (3.1, 3.2) unter Einsatz einer Schweissung, dadurch gekennzeichnet, dass
a) entlang den zu verbindenden Rändern (12.1, 12.2) vor dem Schweissen jeweils ein abgekanteter Bereich (4.1, 4.2) ausgebildet wird, dass
b) die Blechteile (3.1, 3.2) mit den abgekanteten Bereichen (4.1, 4.2) Wange an Wange (11.1, 11.2) in Kontakt gebracht werden, und dass
c) bei der Schweissung die abgekanteten Bereiche (4.1, 4.2) abgebrannt werden, so dass eine schnurartige Schweissnaht (2.1) entsteht.

2. Verfahren nach Anspruch 1, dadurch gekennzeichnet, dass die Schweissung nach einem WIG-Schweissverfahren durchgeführt wird.

3. Verfahren nach Anspruch 1 oder 2, dadurch gekennzeichnet, dass der abgekantete Bereich (4.1, 4.2) jeweils weniger breit ist als ein 5-faches einer Dicke der Blechteile (3.1, 3.2).

4. Verfahren nach einem der Ansprüche 1 bis 3, dadurch gekennzeichnet, dass die Blechteile (3.1, 3.2) auf einer Unterlage (9) abgestützt werden, die eine rinnenartige Vertiefung (10) im Bereich der zu erstellenden Schweissnaht (5.1) aufweist.

5. Anwendung des Verfahrens nach einem der Ansprüche 1 bis 4 zur Herstellung von Blechrohren (1).

6. Anwendung nach Anspruch 5, dadurch gekennzeichnet, dass Blechteile (3.1, 3.2) aus Kupfer verwendet werden.

7. Anwendung nach Anspruch 5 oder 6 zur Herstellung von Rohrbogen, wobei die Schweissnähte (2.1, 2.2) im Wasserlauf angebracht werden.

8. Anwendung nach einem der Ansprüche 5 bis 7, dadurch gekennzeichnet, dass die Blechteile (3.1, 3.2) vorgängig tiefgezogen werden.

9. Blechrohr hergestellt unter Verwendung des Verfahrens nach einem der Ansprüche 1 bis 5, gekennzeichnet durch eine schnurartige Schweissnaht (2.1, 2.2).

10. Blechrohr nach Anspruch 9, dadurch gekennzeichnet, dass es die Form eines Rohrbogens hat, wobei die Schweissnähte (2.1, 2.2) im Wasserlauf angeordnet sind.
